# EUROPEAN PATENT SPECIFICATION

(11) **EP 4 277 367 B1**
(45) Date of publication and mention of the grant of the patent: **06.05.2026**
(21) Application number: 21918295.3
(22) Date of filing: 13.01.2021
(51) Int. Cl.: H04W 52/38, H04W 72/04, H04W 52/48, H04L 1/08, H04W 52/10, H04W 52/14, H04W 52/16, H04W 52/08

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF DE RÉSEAU

(43) Date of publication of application: 15.11.2023
(73) Proprietor: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Kraus & Lederer PartGmbB
(86) International application number: PCT/CN2021/071565
(87) International publication number: WO 2022/151080

(56) References cited:
- CN-A- 110 035 486
- CN-A- 110 710 282
- CN-A- 111 436 108
- CN-A- 111 587 550
- CN-A- 111 953 466
- US-A1- 2017 273 027
- US-A1- 2018 124 709
- US-A1- 2018 213 484
- CATT: "Discussion on potential techniques for PUSCH coverage enhancement", vol. RAN WG1, no. e-Meeting; 20200817 - 20200828, 8 August 2020 (2020-08-08), XP052347097, Retrieved from the Internet <URL:https://ftp.3gpp.org/tsg_ran/WG1_RL1/TSGR1_102-e/Docs/R1-2005724.zip R1-2005724.docx> [retrieved on 20200808]
- VIVO: "Discussion on Solutions for PUCCH coverage enhancement", 3GPP DRAFT; R1-2007681, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 17 October 2020 (2020-10-17), Mobile Competence Centre ; 650, route des Lucioles ; F-06921 Sophia-Antipolis Cedex ; France , XP051939838

## Description

### TECHNICAL FIELD

The embodiments of the present disclosure relate to communication technology, and more particularly, to a wireless communication method and a terminal device.

### BACKGROUND

In the New Radio (NR) system, for uplink channels, such as a Physical Uplink Shared Channel (PUSCH) and a Physical Uplink Control Channel (PUCCH), repeated transmission is used to improve coverage. In repeated transmission of an uplink channel, joint channel estimation can be performed between different transmissions to improve the performance of channel estimation. However, how to perform power control for the joint channel estimation is a problem to be solved. US 20180124709A1 discloses a method and apparatus for controlling uplink transmission power in wireless communication system supporting machine-type communication. US 20180213484A1 discloses a method and device for transmitting signal in wireless communication system. US 20170273027A1 discloses a method and apparatus for controlling uplink transmission power in wireless access system supporting machine-type communication.

### SUMMARY

The embodiments of the present disclosure provide a wireless communication method, and a terminal device. Transmission power of a plurality of repeated transmissions of an uplink channel is same, thereby achieving joint channel estimation between time slots and improving transmission performance of the uplink channel.

In a first aspect, a wireless communication method is provided, which is defined in claim 1.

In a second aspect, a terminal device is provided, which is defined in claim 5.

Further advantageous embodiments of the present disclosure are indicated in the dependent claims. It is to be understood that both the foregoing general description and the following detailed description are exemplary only, and are not restrictive of the present disclosure.

### BRIEF DESCRIPTION OF DRAWINGS

FIG. 1 is a schematic diagram showing an architecture of a communication system in which an embodiment of the present disclosure is applied.
FIG. 2 is a flowchart illustrating a wireless communication method according to an embodiment of the present disclosure.
FIG. 3 is a schematic diagram showing power control according to an embodiment of the present disclosure.
FIG. 4 is a schematic diagram showing power control according to another embodiment of the present disclosure.
FIG. 5 is a schematic diagram showing power control according to yet another embodiment of the present disclosure.
FIG. 6 is a schematic diagram showing power control according to still another embodiment of the present disclosure.
FIG. 7 is a flowchart illustrating a wireless communication method according to another embodiment of the present disclosure.
FIG. 8 is a schematic block diagram of a terminal device according to an embodiment of the present disclosure.
FIG. 9 is a schematic block diagram of a terminal device according to another embodiment of the present disclosure.
FIG. 10 is a schematic block diagram of a network device according to an embodiment of the present disclosure.
FIG. 11 is a schematic block diagram of a communication device according to an embodiment of the present disclosure.
FIG. 12 is a schematic block diagram of an apparatus according to an embodiment of the present disclosure.
FIG. 13 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

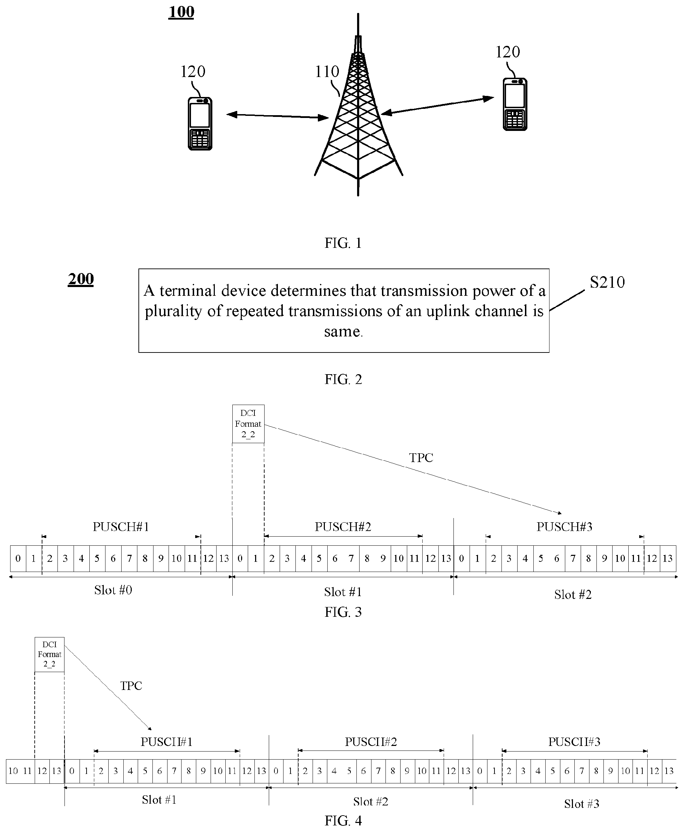

Exemplarily, FIG. 1 shows a communication system 100 in which an embodiment of the present disclosure can be applied. A shown in FIG. 1, the communication system 100 may include a network device 110 which may be a device communicating with a terminal device 120 (or referred to as communication terminal or terminal). The network device 110 may provide communication coverage for a particular geographic area, and may communicate with terminal devices located within the coverage.

FIG. 1 exemplarily shows one network device and two terminal devices. Optionally, the communication system 100 may include multiple network devices, and the coverage of each network device may include other numbers of terminal devices. The embodiment of the present disclosure is not limited to this.

Optionally, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal device 120 with communication functions. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

The terms used in the embodiments of the present disclosure are provided only for explaining the specific embodiments of the present disclosure, rather than limiting the present disclosure. The terms such as "first", "second", "third", "fourth", etc., as used in the description, claims and figures of the present disclosure are used for distinguishing different objects from each other, rather than defining a specific order. In addition, the terms such as "include" and "have" and any variants thereof are intended to cover non-exclusive inclusion.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including a terminal device and a network device) corresponding codes, tables or other means that can be used to indicate related information, and the present disclosure is not limited to its specific implementation. For example, "predefined" may refer to defined in protocols.

In the embodiments of the present disclosure, "protocols" may refer to standard protocols in the communication field, including e.g., the LTE protocol, the NR protocol, and related protocols applied in future communication systems. The present disclosure is not limited to any of these examples.

In the NR system, it is desired to control power of an uplink channel or signal to compensate for path loss and shadow fading of the channel, suppress inter-cell interference, and improve network coverage and system capacity.

In order to better understand the embodiment of the present disclosure, the uplink data transmission in the NR related to the present disclosure will be described.

In the 5G NR system, a base station transmits an uplink grant (DCI format 0_0 or DCI format 0_1) to schedule Physical Uplink Shared Channel (PUSCH) transmission.

When the base station schedules uplink data transmission via Downlink Control Information (DCI) carrying an uplink grant (UL grant), it will include a Time Domain Resource Allocation (TDRA) field in the DCI. The TDRA field has 4 bits, which can indicate 16 different rows in a resource allocation table, each row containing a different resource allocation combination, such as a start position S, a length L, k2, and different repetition types (type) of a PUSCH. Here, k2 represents a number of offset slots between the slot where the DCI is located and the slot where the PUSCH is located. The types of PUSCH time domain resource allocation include Type A and Type B. The difference between Type A and Type B is that the ranges of S and L candidate values corresponding to the two types are different. Type A is mainly for slot-based services, S is relatively early, and L is relatively long. Type B is mainly for Ultra-Reliable and Low Latency Communication (URLLC) services, which has a high requirement on delay, and thus the position of S is relatively flexible in order to transmit the URLLC traffic that could arrive at any time, and L is relatively short for reducing the transmission delay. The value ranges of S and L are shown in Table 1 below.

**Table 1**

| PUSCH Type | Normal cyclic prefix | | | Extended cyclic prefix | | |
|---|---|---|---|---|---|---|
| | S | L | S+L | S | L | *S+L* |
| Type A | 0 | {4,...,14} | {4,...,14} (Repetition for Type A only) | 0 | {4,...,12} | {4,...,12} |
| Type B | {0,...,13} | {1,...,14} | {1,...,14} corresponding to Repetition for Type A; | {0,..., 11} | {1,...,12} | {1,...,12} |
| | | | {1,...,27} corresponding to Repetition for Type B | | | |

Table 2 is a PUSCH time-domain resource allocation table, and the DCI indicates a type of time-domain resource allocation information in the table to the terminal device.

**Table 2**

| Row index | PUSCH type | K2 | S | L |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |

There are two schemes to allocate frequency domain resources of the PUSCH: Type0 and Type1. The allocation scheme of the frequency domain resources of the PUSCH can be configured via higher layer signaling, or can be dynamically indicated via DCI. The Type0 frequency domain resource allocation scheme indicates a Resource Block Group (RBG) allocated to the terminal device via a bitmap. The number of RBs included in the RBG is configured by higher layer parameters (Configuration 1 and Configuration 2) and is dependent on Bandwidth Part (BWP) size, as shown in Table 3 below.

**Table 3**

| BWP Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

In the Type1 frequency domain resource allocation scheme, a resource indication value (RIV) value is formed by jointly encoding the start position (S) and the length (L) of the resource. Each group (S, L) corresponds to one RIV value, and the terminal can derive the corresponding (S, L) from the RIV value. S represents the position of a virtual Resource block (RB), and L represents the number of consecutive allocated RBs.

In order to better understand the embodiments of the present disclosure, the repeated PUSCH transmission in the NR related to the present disclosure will be described.

In the NR system, in order to support the URLLC service, the uplink data transmission is repeatedly transmitted to improve the transmission reliability. The repeated transmission (repetition) of the PUSCH includes two types: PUSCH repetition Type A and PUSCH repetition Type B. The PUSCH repetition type is determined based on higher layer signaling indication. For PUSCH repetition Type A and PUSCH repetition Type B, the PUSCH time domain resource allocation schemes are different:

PUSCH repetition Type A: the start symbol S of PUSCH and the number L of consecutive symbols starting from the symbol S are determined based on the SLIV indicated in the PDCCH.

PUSCH repetition Type B: the start symbol S of PUSCH and the number L of consecutive symbols starting from the symbol S are determined based on the start symbol (startSymbol) and length (length) information corresponding to the row in the time domain resource allocation table, respectively.

The configuration information of the time domain resource allocation table can be the bolded part in the content as follows:

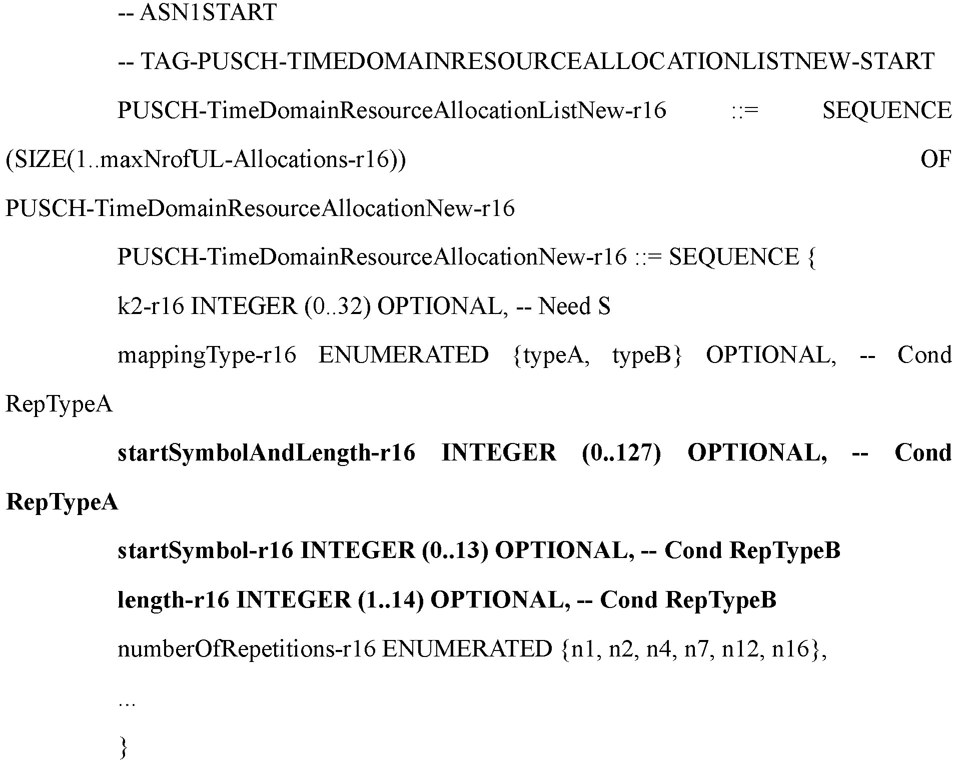

Here, each time domain resource allocation information includes the symbol where the PUSCH is located, and "numberOfRepetitions" indicates the number K of times the PUSCH is transmitted repeatedly. According to the information and the PUSCH repetition Type determined based on higher layer signaling, the terminal device can determine the time domain resource where the repeated PUSCH transmission is located.

For PUSCH repetition Type A, the terminal device repeatedly transmits the same transport block in K consecutive time slots. The symbol allocation in each slot is same, that is, the symbol allocation in the slot as indicated by "startSymbolAndLength".

In the current repeated PUSCH transmission, channel estimation for each transmission is performed independently. The power control of PUSCH is also independent. In the 3rd Generation Partnership Project (3GPP) Release17 (R17) standard, a coverage enhancement project is proposed. For uplink channels, such as PUSCH and PUCCH, repeated transmission is used to improve coverage. In the repeated transmission, joint channel estimation between different transmissions is also proposed to improve the performance of channel estimation, thereby improving the coverage of PUSCH and PUCCH. However, in the repeated transmission of PUSCH and PUCCH, how to perform power control so as to achieve joint channel estimation has not yet been resolved.

In view of the above problem, the present disclosure provides a solution for repeated transmission of an uplink channel. Transmission power of a plurality of repeated transmissions of an uplink channel is same, thereby achieving joint channel estimation between transmission occasions and improving transmission performance of the uplink channel.

The technical solutions of the present disclosure will be described in detail below with reference to specific embodiments.

FIG. 2 is a schematic flowchart illustrating a wireless communication method 200 according to an embodiment of the present disclosure. As shown in FIG. 2, the method 200 may include at least part of the following content.

At S210, a terminal device determines that transmission power of a plurality of repeated transmissions of an uplink channel is same.

In the embodiment of the present disclosure, the transmission power of the plurality of repeated transmissions of the uplink channel is same, thereby achieving joint channel estimation between transmission occasions and improving transmission performance of the uplink channel.

It should be noted that " transmission power of a plurality of repeated transmissions of an uplink channel is same" may also be expressed as " transmission power of a plurality of repeated transmissions of an uplink channel is consistent", and the present disclosure is not limited to this.

In some embodiments, the terminal device may perform joint channel estimation on the plurality of repeated transmissions of the uplink channel.

In some embodiments, the plurality of repeated transmissions of the uplink channel may be part or all of repeated transmissions of the uplink channel.

In some embodiments, the uplink channel may include, but not limited to, at least one of:
PUSCH or PUCCH.

In some embodiments, the plurality of repeated transmissions of the uplink channel may be within a transmission occasion set. For example, the plurality of repeated transmissions of the uplink channel may be within a first transmission occasion set. In this case, the above S210 may specifically be: the terminal device determining that the transmission power of the plurality of repeated transmissions of the uplink channel in the first transmission occasion set is same.

In some embodiments, a number of transmission occasions included in the first transmission occasion set may be pre-configured or agreed in a protocol, or may be configured by a network device.

In some embodiments, as Example 1, the above S210 may specifically be: in the plurality of repeated transmissions of the uplink channel in the first transmission occasion set, the terminal device ignoring a power control command applied to any one or more of the plurality of repeated transmissions in the first transmission occasion set, or the terminal device refraining from receiving a power control command applied to any one or more of the plurality of repeated transmissions in the first transmission occasion set.

It should be noted that the power control of the uplink channel mainly includes an operating point of an open-loop power control, an offset of a closed-loop power control, and other adjustment amounts. Here, the open-loop power control part is mainly related to semi-static configuration parameters and path loss estimation, and is mainly used to overcome large-scale fading of the channel. Taking the power control of PUSCH as an example, the closed-loop power control part includes *f_{b,f,c}*(*i,l*)*,* and the base station dynamically controls the power of PUSCH using a power control command. Here, *f_{b,f,c}*(*i,l*) is the power offset determined based on the power control command. For the closed-loop power control part, the terminal device can obtain the power control command via DCI, which includes DCI format 0_1 for scheduling PUSCH transmission, which includes the power control command for the scheduled PUSCH. The terminal device can also receive the power control command via DCI format 2_2, and its scrambled Radio Network Temporary Identity (RNTI), including Transmission Power Control Physical Uplink Shared Channel Radio Network Temporary Identity (TPC-PUSCH-RNTI) or Transmission Power Control Physical Uplink Control Channel Radio Network Temporary Identity (TPC-PUCCH-RNTI) indicates the power control command for PUSCH or PUCCH. The scheme for adjusting the closed-loop power control value according to the power control command includes an accumulative scheme and a non-accumulative scheme. The accumulation scheme is to update the closed-loop power control value according to the power adjustment amount corresponding to the received power control command on the basis of the previous closed-loop power control value. The non-accumulative scheme is to directly use the power adjustment amount corresponding to the received power control command as the closed-loop power control value. Table 4 below shows the power adjustment amount corresponding to a 2-bit power control command for PUSCH.

**Table 4**

| TPC command field | Accumulative *δ*_{PUSCH, *b,f,c*} [dB] | Non-accumulative *δ*_{PUSCH, *b,f,c*} [dB] |
|---|---|---|
| 0 | -1 | -4 |
| 1 | 0 | -1 |
| 2 | 1 | 1 |
| 3 | 3 | 4 |

For PUSCH repetition Type A, the terminal device repeatedly transmits the same transport block in K consecutive time slots. In order to achieve joint channel estimation between PUSCH transmissions, that is, between the time slots, the transmission power of PUSCH in different time slots needs to be consistent. If the terminal device configured with PUSCH repetition Type A is also configured with a PDCCH search space for receiving DCI format 2_2 and a corresponding Control Resource Set (CORESET), the terminal device needs to monitor DCI format 2_2 to receive a power control command for PUSCH. In 3GPP TS 38.213, a process in which the terminal device performs power adjustment according to the received power control command in the accumulative and non-accumulative schemes is described. Here, for a certain PUSCH transmission, the power adjustment is performed according to the power control command. For the non-accumulative scheme, the adjustment amount is determined directly according to the power control command indicated in the DCI. For the accumulative scheme, the adjustment is performed on the basis of the previous power adjustment amount for the PUSCH transmission, according to a result of summing the power control commands received within a defined period of time. Regardless of the accumulative or non-accumulative scheme, in Example 1, the terminal device ignores the power control command applied to any one or more of the plurality of repeated transmissions in the first transmission occasion set, or the terminal device refrains from receiving the power control command applied to any one or more of the plurality of repeated transmissions in the first transmission occasion set.

Taking PUSCH as an example, as shown in FIG. 3, the power control command indicated by DCI format 2_2 is applied to a third transmission of PUSCH (that is, PUSCH#3). At this time, the transmission power of PUSCH#3 is not adjusted, that is, the terminal device performs no adjustment for the power control commands applied during the period of PUSCH#1-3, or the terminal device does not receive the power control commands applied to the period of PUSCH#1-3.

In some embodiments, as Example 2, the above S210 may specifically be: in the plurality of repeated transmissions of the uplink channel in the first transmission occasion set, the terminal device performing same power adjustment for the plurality of repeated transmissions of the uplink channel according to a power control command effective in the first transmission occasion set.

That is, regardless of the accumulative or non-accumulative scheme, in Example 2, the terminal device performs the same power adjustment on the plurality of repeated transmissions of the uplink channel according to the power control command effective in the first transmission occasion set.

Taking PUSCH as an example, as shown in FIG. 4, the power control command indicated by DCI format 2_2 is applied to the first transmission of PUSCH (that is, PUSCH#1). At this time, the terminal device performs transmission power adjustment on PUSCH#1-3 according to the power control command.

In some embodiments, as Example 3, the above S210 may specifically be: the terminal device receiving, in the first transmission occasion set, a power control command applied to any one or more of the plurality of repeated transmissions in the first transmission occasion set; and the terminal device performing power adjustment for the uplink channel according to the power control command at a transmission occasion or a transmission occasion set after the first transmission occasion set.

It should be noted that, taking PUSCH as an example, at this stage, when a power control command is applied to a certain transmission occasion, the power of the PUSCH at the transmission occasion is adjusted accordingly. In the above Example 1, in order to keep the power of the repeatedly transmitted PUSCH consistent, the terminal device may ignore the PUSCH power control command applied to one or more of the plurality of PUSCH transmission occasions in a transmission occasion set, such that the plurality of PUSCH transmission occasions in the transmission occasion set can maintain the same power, so as to perform joint channel estimation. In this Example 3, although the terminal device does not perform power adjustment in the transmission occasion set, it can be accumulated into the power adjustment at a subsequent transmission occasion, provided that the subsequent transmission occasion does not belong to the transmission occasions in the transmission occasion set, that is, there is no need to perform joint channel estimation with the transmission occasion set. In other words, the terminal device postpones the time the received power control command becomes effective, for example, until the latest transmission occasion or transmission occasion set after the transmission occasion set.

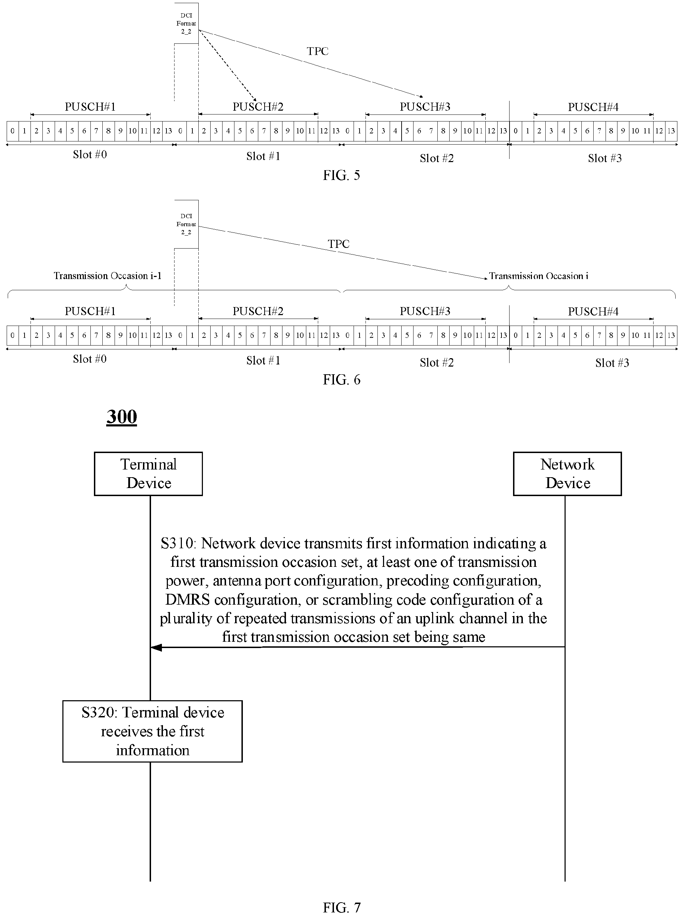

Taking PUSCH as an example, as shown in FIG. 5, the power control command should become effective on PUSCH#2, but since PUSCH#1 and PUSCH#2 belong to a transmission occasion set, their power needs to be consistent, and the terminal device does not adjust the power of PUSCH#2 according to the power control command, but postpones the adjustment according to the power control command until PUSCH#3, and PUSCH#3 does not belong to the same transmission occasion set as PUSCH#1 and PUSCH#2.

In some embodiments, as Example 4, the above S210 may specifically be: the terminal device determining that the transmission power of the plurality of repeated transmissions of the uplink channel in a first transmission occasion is same.

In some embodiments, in Example 4, a number of transmission occasions included in the first transmission occasion may be pre-configured or agreed in a protocol, or may be configured by a network device.

It should be noted that, at this stage, *P_{PUSCH ,b, f ,c}* (*i, j, q_{d}, l*) denotes the transmission power of PUSCH at the PUSCH transmission occasion i on the activated uplink BWP *b* on the carrier *f* of the serving cell c, when the parameter set configuration index is *j* and the PUSCH power control adjustment state index is *l.* That is, the transmission occasion *i* represents one PUSCH transmission occasion.

In order to achieve joint channel estimation between repeated transmissions of the PUSCH, the power of the repeated transmissions of the PUSCHs should be consistent. Since the power control is determined according to the transmission occasion of the PUSCH. In Example 4, it can be defined that a PUSCH transmission occasion i includes a set of transmission occasions where the PUSCH is repeatedly transmitted, or a PUSCH transmission occasion i includes a set of PUSCH transmission occasions. Since the power setting for PUSCH transmissions at a PUSCH transmission occasion is consistent, the power setting for the set of repeated PUSCH transmissions is also consistent. The effectiveness of the power control command mentioned in Example 1 above is for the power adjustment amount of the PUSCH at the PUSCH transmission occasion i. Specifically, the PUSCH transmission occasions defined in Example 4 may include a set of PUSCH transmission occasions for one or more repeated PUSCH transmissions, and the number of PUSCH transmission occasions as included may be predefined or indicated via signaling. As shown in FIG. 6, the repeated transmission of PUSCH includes 4 transmissions, among which the first two are defined as one transmission occasion, and the last two are defined as another transmission occasion. The power of each transmission occasion can be set separately. The power control command indicated by DCI format 2_2 is applied to the transmission occasion i, and the transmission power of PUSCH#3 and PUSCH#4 is adjusted accordingly.

In some implementations of Example 4, according to the configuration of the transmission occasions, the time slots for joint channel estimation may be further determined. If the PUSCH transmission power in a transmission occasion is the same, joint channel estimation can be performed in this transmission occasion.

It should be noted that, with the definition of the transmission occasion in Example 4, the method for determining the transmission occasion where the power control command becomes effective in the prior art can be applied to the new transmission occasion.

Therefore, in the embodiment of the present disclosure, the transmission power of the plurality of repeated transmissions of the uplink channel is the same, thereby achieving joint channel estimation between transmission occasions and improving the transmission performance of the uplink channel.

FIG. 7 is a schematic flowchart illustrating a wireless communication method 300 according to an embodiment of the present disclosure. As shown in FIG. 7, the method 300 may include at least part of the following content.

At S310, a network device transmits first information indicating a first transmission occasion set.

Here, at least one of transmission power, antenna port configuration, precoding configuration, DMRS configuration, or scrambling code configuration of a plurality of repeated transmissions of an uplink channel in the first transmission occasion set may be same.

At S320, a terminal device receives the first information.

In the embodiment of the present disclosure, at least one of transmission power, antenna port configuration, precoding configuration, DMRS configuration, or scrambling code configuration of the plurality of repeated transmissions of the uplink channel in the first transmission occasion set may be same, such that joint channel estimation can be performed on the plurality of repeated transmissions of uplink channels in the first transmission occasion set.

It should be noted that the plurality of repeated transmissions of the uplink channel in the first transmission occasion set may also have some other features to facilitate joint channel estimation, the embodiment of the present disclosure is not limited to this.

In some embodiments, the terminal device may perform joint channel estimation for the plurality of repeated transmissions of the uplink channel in the first transmission occasion set.

In some embodiments, the network device may perform joint channel estimation for the plurality of repeated transmissions of the uplink channel in the first transmission occasion set.

In some embodiments, the plurality of repeated transmissions of the uplink channel may be part or all of repeated transmissions of the uplink channel.

In some embodiments, the uplink channel may include, but not limited to, at least one of:
PUSCH or PUCCH.

In some embodiments, a number of transmission occasions included in the first transmission occasion set may be pre-configured or agreed in a protocol, or may be configured by a network device.

Therefore, in the embodiment of the present disclosure, the network device indicates that at least one of transmission power, antenna port configuration, precoding configuration, DMRS configuration, or scrambling code configuration of a plurality of repeated transmissions of an uplink channel in a first transmission occasion set is same, which facilitates achieving joint channel estimation between transmission occasions and improving transmission performance of the uplink channel.

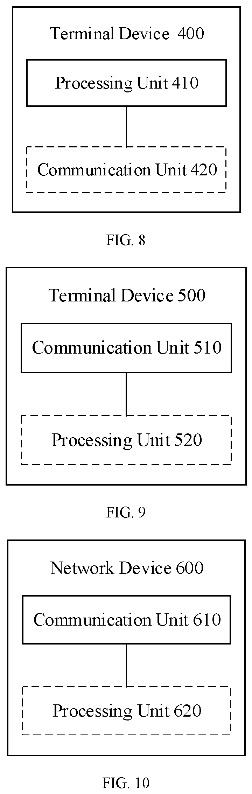

The method embodiments of the present disclosure have been described in detail above with reference to FIGS. 2-7, and the apparatus embodiments of the present disclosure will be described in detail below with reference to FIGS. 8-13. It can be appreciated that the apparatus embodiments and the method embodiments correspond to each other, and for similar descriptions, reference can be made to the method embodiments.

FIG. 8 shows a schematic block diagram of a terminal device 400 according to an embodiment of the present disclosure. As shown in FIG. 8, the terminal device 400 includes:
a processing unit 410 configured to determine that transmission power of a plurality of repeated transmissions of an uplink channel is same.

In some embodiments, the processing unit 410 may be configured to:
determine that the transmission power of the plurality of repeated transmissions of the uplink channel in a first transmission occasion set is same.

In some embodiments, the terminal device 400 may further include a communication unit 420.

In the plurality of repeated transmissions of the uplink channel in the first transmission occasion set, the processing unit 410 is configured to ignore a power control command applied to any one or more of the plurality of repeated transmissions in the first transmission occasion set, or the processing unit 410 is configured to control the communication unit 420 to refrain from receiving a power control command applied to any one or more of the plurality of repeated transmissions in the first transmission occasion set.

In some embodiments, the processing unit 410 may be configured to:
perform, in the plurality of repeated transmissions of the uplink channel in the first transmission occasion set, same power adjustment for the plurality of repeated transmissions of the uplink channel according to a power control command effective in the first transmission occasion set.

In some embodiments, the terminal device 400 may further include a communication unit 420 configured to receive, in the first transmission occasion set, a power control command applied to any one or more of the plurality of repeated transmissions in the first transmission occasion set. The processing unit 410 may be configured to perform power adjustment for the uplink channel according to the power control command at a transmission occasion or a transmission occasion set after the first transmission occasion set.

In some embodiments, a number of transmission occasions included in the first transmission occasion set is pre-configured or agreed in a protocol, or is configured by a network device.

In some embodiments, the processing unit 410 may be configured to:
determine that the transmission power of the plurality of repeated transmissions of the uplink channel in a first transmission occasion is same.

In some embodiments, a number of transmission occasions included in the first transmission occasion is pre-configured or agreed in a protocol, or is configured by a network device.

In some embodiments, the processing unit 410 may be further configured to perform joint channel estimation on the plurality of repeated transmissions of the uplink channel.

In some embodiments, the plurality of repeated transmissions of the uplink channel may be part or all repeated transmissions of the uplink channel.

In some embodiments, the uplink channel may include at least one of:
a Physical Uplink Shared Channel (PUSCH) or a Physical Uplink Control Channel (PUCCH).

Optionally, in some embodiments, the above communication unit may be a communication interface or a transceiver, or an input/output interface of a communication chip or a system-on-chip. The above processing unit may be one or more processors.

It can be appreciated that the terminal device 400 according to the embodiment of the present disclosure may correspond to the terminal device in the method embodiment of the present disclosure, and the above and other operations and/or functions of the respective units in the terminal device 400 are provided for the purpose of implementing the process flow corresponding to the terminal device in the method 200 shown in FIG. 2, and details thereof will be not omitted here for brevity.

FIG. 9 shows a schematic block diagram of a terminal device 500 according to an embodiment of the present disclosure. As shown in FIG. 9, the terminal device 500 includes:
a communication unit 510 configured to receive first information indicating a first transmission occasion set.

At least one of transmission power, antenna port configuration, precoding configuration, Demodulation Reference Signal (DMRS) configuration, or scrambling code configuration of a plurality of repeated transmissions of an uplink channel in the first transmission occasion set is same.

In some embodiments, the terminal device 500 may further include a processing unit 520 configured to perform joint channel estimation on the plurality of repeated transmissions of the uplink channel in the first transmission occasion set.

In some embodiments, the plurality of repeated transmissions of the uplink channel may be part or all repeated transmissions of the uplink channel.

In some embodiments, a number of transmission occasions included in the first transmission occasion set may be pre-configured or agreed in a protocol, or may be configured by a network device.

In some embodiments, the uplink channel may include at least one of:
a Physical Uplink Shared Channel (PUSCH) or a Physical Uplink Control Channel (PUCCH).

Optionally, in some embodiments, the above communication unit may be a communication interface or a transceiver, or an input/output interface of a communication chip or a system-on-chip. The above processing unit may be one or more processors.

It can be appreciated that the terminal device 500 according to the embodiment of the present disclosure may correspond to the terminal device in the method embodiment of the present disclosure, and the above and other operations and/or functions of the respective units in the terminal device 500 are provided for the purpose of implementing the process flow corresponding to the terminal device in the method 300 shown in FIG. 7, and details thereof will be not omitted here for brevity.

FIG. 10 shows a schematic block diagram of a network device 600 according to an embodiment of the present disclosure. As shown in FIG. 10, the network device 600 includes:
a communication unit 610 configured to transmit first information indicating a first transmission occasion set.

At least one of transmission power, antenna port configuration, precoding configuration, Demodulation Reference Signal (DMRS) configuration, or scrambling code configuration of a plurality of repeated transmissions of an uplink channel in the first transmission occasion set is same.

In some embodiments, the network device 600 may further include a processing unit 620 configured to perform joint channel estimation on the plurality of repeated transmissions of the uplink channel in the first transmission occasion set.

In some embodiments, the plurality of repeated transmissions of the uplink channel may be part or all repeated transmissions of the uplink channel.

In some embodiments, a number of transmission occasions included in the first transmission occasion set may be pre-configured or agreed in a protocol, or may be configured by a network device.

In some embodiments, the uplink channel may include at least one of:
a Physical Uplink Shared Channel (PUSCH) or a Physical Uplink Control Channel (PUCCH).

Optionally, in some embodiments, the above communication unit may be a communication interface or a transceiver, or an input/output interface of a communication chip or a system-on-chip. The above processing unit may be one or more processors.

It can be appreciated that the network device 600 according to the embodiment of the present disclosure may correspond to the network device in the method embodiment of the present disclosure, and the above and other operations and/or functions of the respective units in the network device 600 are provided for the purpose of implementing the process flow corresponding to the network device in the method 300 shown in FIG. 7, and details thereof will be not omitted here for brevity.

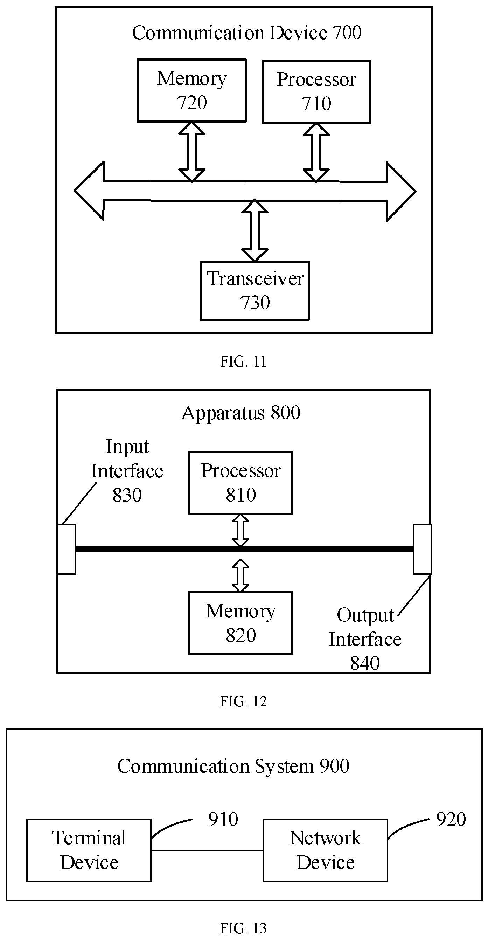

FIG. 11 is a schematic diagram showing a structure of a communication device 700 according to an embodiment of the present disclosure. The communication device 700 shown in FIG. 11 includes a processor 710, and the processor 710 can invoke and execute a computer program from a memory to implement the method in the embodiment of the present disclosure.

Optionally, as shown in FIG. 11, the communication device 700 may further include a memory 720. The processor 710 can invoke and execute a computer program from the memory 720 to implement the method in the embodiment of the present disclosure.

The memory 720 may be a separate device independent from the processor 710, or may be integrated in the processor 710.

Optionally, as shown in FIG. 11, the communication device 700 may further include a transceiver 730, and the processor 710 may control the transceiver 730 to communicate with other devices, and in particular, transmit information or data to other devices, or receive information or data transmitted by other devices.

Here, the transceiver 730 may include a transmitter and a receiver. The transceiver 730 may further include one or more antennas.

Optionally, the communication device 700 may specifically be the network device according to the embodiment of the present disclosure, and the communication device 700 may implement the corresponding processes implemented by the network device in any of the methods according to the embodiments of the present disclosure. For the sake of brevity, details thereof will be omitted here.

Optionally, the communication device 700 may specifically be the mobile terminal/terminal device according to the embodiment of the present disclosure, and the communication device 700 may implement the corresponding processes implemented by the mobile terminal/terminal device in any of the methods according to the embodiments of the present disclosure. For the sake of brevity, details thereof will be omitted here.

FIG. 12 is a schematic diagram showing a structure of an apparatus according to an embodiment of the present disclosure. The apparatus 800 shown in FIG. 12 includes a processor 810, and the processor 810 can invoke and execute a computer program from a memory to implement the method in the embodiment of the present disclosure.

Optionally, as shown in FIG. 12, the apparatus 800 may further include a memory 820. The processor 810 can invoke and execute a computer program from the memory 820 to implement the method in the embodiment of the present disclosure.

The memory 820 may be a separate device independent from the processor 810, or may be integrated in the processor 810.

Optionally, the apparatus 800 may further include an input interface 830. The processor 810 can control the input interface 830 to communicate with other devices or chips, and in particular, obtain information or data transmitted by other devices or chips.

Optionally, the apparatus 800 may further include an output interface 840. The processor 810 can control the output interface 840 to communicate with other devices or chips, and in particular, output information or data to other devices or chips.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the mobile terminal/terminal device in the embodiment of the present disclosure, and the apparatus can implement the corresponding processes implemented by the mobile terminal/terminal device in the various methods of the embodiments of the present disclosure. For the sake of brevity, details thereof will be omitted here.

Optionally, the apparatus in the embodiment of the present disclosure may be a chip, e.g., system-level chip, a system-chip, a chip system, or a system-on-chip.

FIG. 13 is a schematic block diagram showing a communication system 900 according to an embodiment of the present disclosure. As shown in FIG. 13, the communication system 900 includes a terminal device 910 and a network device 920.

Here, the terminal device 910 can be configured to implement the corresponding functions implemented by the terminal device in the above method, and the network device 920 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed on a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed on a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to the claims.

## Claims

1. A wireless communication method, comprising:
determining (S210), by a terminal device, that transmission power of a plurality of repeated transmissions of an uplink channel is same,
wherein the plurality of repeated transmissions of the uplink channel are performed per time slot, the method further comprising:
performing, by the network device, joint channel estimation between time slots on the plurality of repeated transmissions of the uplink channel,
wherein the uplink channel comprises a Physical Uplink Control Channel, PUCCH;
wherein said determining (S210), by the terminal device, that the transmission power of the plurality of repeated transmissions of the uplink channel is same comprises:
determining, by the terminal device, that the transmission power of the plurality of repeated transmissions of the uplink channel in a first transmission occasion set is same;
wherein a number of transmission occasions included in the first transmission occasion set is configured by a network device.

2. The method according to claim 1, wherein said determining, by the terminal device, that the transmission power of the plurality of repeated transmissions of the uplink channel in the first transmission occasion set is same comprises:
performing, by the terminal device in the plurality of repeated transmissions of the uplink channel in the first transmission occasion set, same power adjustment for the plurality of repeated transmissions of the uplink channel according to a power control command effective in the first transmission occasion set.

3. The method according to claim 1, wherein said determining, by the terminal device, that the transmission power of the plurality of repeated transmissions of the uplink channel in the first transmission occasion set is same comprises:
receiving, by the terminal device in the first transmission occasion set, a power control command applied to any one or more of the plurality of repeated transmissions in the first transmission occasion set; and
performing, by the terminal device, power adjustment for the uplink channel according to the power control command at a transmission occasion or a transmission occasion set after the first transmission occasion set.

4. The method according to any one of claims 1 to 3, wherein the plurality of repeated transmissions of the uplink channel are part or all repeated transmissions of the uplink channel.

5. A terminal device (700), comprising:
a memory (720) having a computer program stored thereon; and
a processor (710) configured to invoke and execute the computer program from the memory (720) to implement a wireless communication method, the method comprising:
determining (S210) that transmission power of a plurality of repeated transmissions of an uplink channel is same,
wherein the plurality of repeated transmissions of the uplink channel are performed per time slot;
wherein the uplink channel comprises a Physical Uplink Control Channel, PUCCH;
wherein said determining (S210), by the terminal device, that the transmission power of the plurality of repeated transmissions of the uplink channel is same comprises:
determining, by the terminal device, that the transmission power of the plurality of repeated transmissions of the uplink channel in a first transmission occasion set is same;
wherein a number of transmission occasions included in the first transmission occasion set is configured by a network device;
wherein joint channel estimation between time slots on the plurality of repeated transmissions of the uplink channel performed by a network device.

6. The terminal device (700) according to claim 5, wherein said determining that the transmission power of the plurality of repeated transmissions of the uplink channel in the first transmission occasion set is same comprises:
performing, in the plurality of repeated transmissions of the uplink channel in the first transmission occasion set, same power adjustment for the plurality of repeated transmissions of the uplink channel according to a power control command effective in the first transmission occasion set.

7. The terminal device (700) according to claim 5, wherein said determining that the transmission power of the plurality of repeated transmissions of the uplink channel in the first transmission occasion set is same comprises:
receiving, in the first transmission occasion set, a power control command applied to any one or more of the plurality of repeated transmissions in the first transmission occasion set; and
performing power adjustment for the uplink channel according to the power control command at a transmission occasion or a transmission occasion set after the first transmission occasion set.

8. The terminal device (700) according to any one of claims 5 to 7, wherein the plurality of repeated transmissions of the uplink channel are part or all repeated transmissions of the uplink channel.

## Patentansprüche

1. Drahtloses Kommunikationsverfahren, umfassend:
Bestimmen (S210) durch eine Endgerätevorrichtung, dass die Sendeleistung einer Vielzahl wiederholter Übertragungen eines Uplink-Kanals gleich ist,
wobei die Vielzahl wiederholter Übertragungen des Uplink-Kanals pro Zeitschlitz erfolgt, wobei das Verfahren weiter Folgendes umfasst:
Durchführen einer gemeinsamen Kanalschätzung zwischen Zeitschlitzen an der Vielzahl wiederholter Übertragungen des Uplink-Kanals durch die Netzwerkvorrichtung,
wobei der Uplink-Kanal einen physikalischen Uplink-Steuerkanal, PUCCH, umfasst;
wobei das Bestimmen (S210) durch die Endgerätevorrichtung, dass die Sendeleistung der Vielzahl wiederholter Übertragungen des Uplink-Kanals gleich ist, Folgendes umfasst:
Bestimmen durch die Endgerätevorrichtung, dass die Sendeleistung der Vielzahl wiederholter Übertragungen des Uplink-Kanals in einem ersten Sendegelegenheitssatz gleich ist;
wobei eine Anzahl von Sendegelegenheiten, die in dem ersten Sendegelegenheitssatz eingeschlossen sind, von einer Netzwerkvorrichtung konfiguriert wird.

2. Verfahren nach Anspruch 1, wobei die Endgerätevorrichtung bestimmt, dass die Sendeleistung der Vielzahl wiederholter Übertragungen des Uplink-Kanals in dem ersten Sendegelegenheitssatz gleich ist, Folgendes umfasst:
Durchführen durch die Endgerätevorrichtung in der Vielzahl wiederholter Übertragungen des Uplink-Kanals in dem ersten Sendegelegenheitssatz einer gleichen Leistungseinstellung für die Vielzahl wiederholter Übertragungen des Uplink-Kanals gemäß einem in dem ersten Sendegelegenheitssatz wirksamen Leistungssteuerbefehl.

3. Verfahren nach Anspruch 1, wobei die Endgerätevorrichtung bestimmt, dass die Sendeleistung der Vielzahl wiederholter Übertragungen des Uplink-Kanals in dem ersten Sendegelegenheitssatz gleich ist, Folgendes umfasst:
Empfangen durch die Endgerätevorrichtung in dem ersten Sendegelegenheitssatz eines Leistungssteuerbefehls, der auf eine oder mehrere der Vielzahl wiederholter Übertragungen in dem ersten Sendegelegenheitssatz angewendet wird; und
Durchführen durch die Endgerätevorrichtung einer Leistungseinstellung für den Uplink-Kanal gemäß dem Leistungssteuerbefehl bei einer Sendegelegenheit oder einem Sendegelegenheitssatz nach dem ersten Sendegelegenheitssatz.

4. Verfahren nach einem der Ansprüche 1 bis 3, wobei die Vielzahl wiederholter Übertragungen des Uplink-Kanals ein Teil oder alle wiederholten Übertragungen des Uplink-Kanals sind.

5. Endgerätevorrichtung (700), umfassend:
einen Speicher (720), der ein Computerprogramm darauf gespeichert aufweist; und
einen Prozessor (710), der dazu konfiguriert ist, das Computerprogramm aus dem Speicher (720) aufzurufen und auszuführen, um ein drahtloses Kommunikationsverfahren zu implementieren, wobei das Verfahren Folgendes umfasst:
Bestimmen (S210), dass die Sendeleistung einer Vielzahl wiederholter Übertragungen eines Uplink-Kanals gleich ist,
wobei die Vielzahl wiederholter Übertragungen des Uplink-Kanals pro Zeitschlitz erfolgt;
wobei der Uplink-Kanal einen physikalischen Uplink-Steuerkanal, PUCCH, umfasst;
wobei das Bestimmen (S210) durch die Endgerätevorrichtung, dass die Sendeleistung der Vielzahl wiederholter Übertragungen des Uplink-Kanals gleich ist, Folgendes umfasst:
Bestimmen durch die Endgerätevorrichtung, dass die Sendeleistung der Vielzahl wiederholter Übertragungen des Uplink-Kanals in einem ersten Sendegelegenheitssatz gleich ist;
wobei eine Anzahl von Sendegelegenheiten, die in dem ersten Sendegelegenheitssatz eingeschlossen ist, von einer Netzwerkvorrichtung konfiguriert wird;
wobei die gemeinsame Kanalschätzung zwischen Zeitschlitzen der Vielzahl wiederholter Übertragungen des Uplink-Kanals von einer Netzwerkvorrichtung durchgeführt wird.

6. Endgerätevorrichtung (700) nach Anspruch 5, wobei das Bestimmen, dass die Sendeleistung der Vielzahl wiederholter Übertragungen des Uplink-Kanals in dem ersten Sendegelegenheitssatz gleich ist, Folgendes umfasst:
Durchführen in der Vielzahl wiederholter Übertragungen des Uplink-Kanals in dem ersten Sendegelegenheitssatz der gleichen Leistungseinstellung für die Vielzahl wiederholter Übertragungen des Uplink-Kanals gemäß einem in dem ersten Sendegelegenheitssatz wirksamen Leistungssteuerbefehl.

7. Endgerätevorrichtung (700) nach Anspruch 5, wobei das Bestimmen, dass die Sendeleistung der Vielzahl wiederholter Übertragungen des Uplink-Kanals in dem ersten Sendegelegenheitssatz gleich ist, Folgendes umfasst:
Empfangen in dem ersten Sendegelegenheitssatz eines Leistungssteuerbefehls, der auf eine oder mehrere der Vielzahl wiederholter Übertragungen in dem ersten Sendegelegenheitssatz angewendet wird; und
Durchführen von Leistungseinstellung für den Uplink-Kanal gemäß dem Leistungssteuerbefehl bei einer Sendegelegenheit oder einem Sendegelegenheitssatz nach dem ersten Sendegelegenheitssatz.

8. Endgerätevorrichtung (700) nach einem der Ansprüche 5 bis 7, wobei die Vielzahl wiederholter Übertragungen des Uplink-Kanals ein Teil oder alle wiederholten Übertragungen des Uplink-Kanals sind.

## Revendications

1. Procédé de communication sans fil, comprenant :
la détermination (S210), par un dispositif terminal, que la puissance de transmission d'une pluralité de transmissions répétées d'un canal de liaison montante est identique,
dans lequel plusieurs transmissions répétées du canal de liaison montante sont effectuées par intervalle de temps, le procédé comprenant en outre :
la réalisation, par le dispositif réseau, d'une estimation conjointe du canal entre des créneaux temporels sur la pluralité de transmissions répétées du canal de liaison montante,
dans lequel le canal de liaison montante comprend un canal de commande de liaison montante physique, PUCCH ;
dans lequel ladite détermination (S210), par le dispositif terminal, que la puissance de transmission de la pluralité de transmissions répétées du canal de liaison montante est identique comprend :
la détermination, par le dispositif terminal, que la puissance de transmission de la pluralité de transmissions répétées du canal de liaison montante dans un premier ensemble d'occasions de transmission est identique ;
dans lequel un certain nombre d'occasions de transmission incluses dans le premier ensemble d'occasions de transmission sont configurées par un dispositif réseau.

2. Procédé selon la revendication 1, dans lequel la détermination, par le dispositif terminal, que la puissance de transmission de la pluralité de transmissions répétées du canal de liaison montante dans le premier ensemble de transmissions est identique, comprend :
la réalisation, par le dispositif terminal dans la pluralité de transmissions répétées du canal de liaison montante dans le premier ensemble d'occasions de transmission, du même réglage de puissance pour la pluralité de transmissions répétées du canal de liaison montante selon une commande de contrôle de puissance effective dans le premier ensemble d'occasions de transmission.

3. Procédé selon la revendication 1, dans lequel ladite détermination, par le dispositif terminal, que la puissance de transmission de la pluralité de transmissions répétées du canal de liaison montante dans le premier ensemble de transmissions est identique, comprend :
la réception, par le dispositif terminal de la première série de transmissions, d'une commande de contrôle de puissance appliquée à une ou plusieurs des transmissions répétées de la première série de transmissions ; et
la réalisation, par le dispositif terminal, d'un réglage de puissance du canal de liaison montante conformément à la commande de contrôle de puissance lors d'une transmission ou d'une transmission programmée après la première transmission programmée.

4. Procédé selon l'une quelconque des revendications 1 à 3, dans lequel la pluralité de transmissions répétées du canal de liaison montante sont une partie ou la totalité des transmissions répétées du canal de liaison montante.

5. Dispositif terminal (700), comprenant :
une mémoire (720) sur laquelle est stocké un programme informatique ; et
un processeur (710) configuré pour invoquer et exécuter le programme informatique à partir de la mémoire (720) afin de mettre en œuvre un procédé de communication sans fil, le procédé comprenant :
la détermination (S210) que la puissance de transmission d'une pluralité de transmissions répétées d'un canal de liaison montante est identique,
dans lequel la pluralité de transmissions répétées du canal de liaison montante sont effectuées par créneau temporel ;
dans lequel le canal de liaison montante comprend un Canal de Commande de Liaison Montante Physique, PUCCH ;
dans lequel ladite détermination (S210), par le dispositif terminal, que la puissance de transmission de la pluralité de transmissions répétées du canal de liaison montante est identique comprend :
la détermination, par le dispositif terminal, que la puissance de transmission de la pluralité de transmissions répétées du canal de liaison montante dans un premier ensemble d'occasions de transmission est la même ;
dans lequel un certain nombre d'occasions de transmission incluses dans le premier ensemble d'occasions de transmission est configuré par un dispositif réseau ;
dans lequel une estimation conjointe du canal entre les créneaux temporels sur la pluralité des transmissions répétées du canal de liaison montante est effectuée par un dispositif réseau.

6. Dispositif terminal (700) selon la revendication 5, dans lequel ledit dispositif déterminant que la puissance de transmission de la pluralité de transmissions répétées du canal de liaison montante dans le premier ensemble d'occasions de transmission est identique comprend :
la réalisation, dans la pluralité de transmissions répétées du canal de liaison montante dans le premier ensemble d'occasions de transmission, du même ajustement de puissance pour la pluralité de transmissions répétées du canal de liaison montante selon une commande de contrôle de puissance effective dans le premier ensemble d'occasions de transmission.

7. Dispositif terminal (700) selon la revendication 5, dans lequel ladite détermination que la puissance de transmission de la pluralité de transmissions répétées du canal de liaison montante dans le premier ensemble d'occasions de transmission est identique comprend :
la réception, lors de la première série de transmissions, d'une commande de contrôle de puissance appliquée à une ou plusieurs des transmissions répétées de la première série de transmissions ; et
la réalisation d'un ajustement de puissance pour le canal de liaison montante conformément à la commande de contrôle de puissance lors d'une transmission ou d'une transmission programmée après la première transmission programmée.

8. Dispositif terminal (700) selon l'une quelconque des revendications 5 à 7, dans lequel la pluralité de transmissions répétées du canal de liaison montante sont une partie ou la totalité des transmissions répétées du canal de liaison montante.
